# EUROPEAN PATENT APPLICATION

(11) **EP 4 455 206 A1**
(43) Date of publication of application: **30.10.2024**
(21) Application number: 22911013.5
(22) Date of filing: 13.12.2022
(51) Int. Cl.: C08L 33/12, B29C 45/00, B29C 48/00, C08J 5/00, C08K 5/05, C08K 5/09, C08K 5/20

(54) **METHACRYLIC RESIN COMPOSITION FOR INJECTION MOLDING OR EXTRUSION MOLDING, RESIN MOLDED BODY AND METHOD FOR PRODUCING SAME**

(30) Priority: 20.12.2021 JP 2021206169
(71) Applicant: Mitsubishi Chemical Corporation, Tokyo 100-8251 (JP)
(72) Inventor: MOTOMATSU, Yudai, Tokyo 100-8251 (JP)
(74) Representative: Hoffmann Eitle
(86) International application number: PCT/JP2022/045856
(87) International publication number: WO 2023/120305

(57) **Abstract**

A methacrylic resin composition for injection molding or extrusion molding comprising a component (A), a component (B), and a component (C) below, wherein a ratio denoted by [mass of component (C)]/[mass of component (B)] is 0.01 to 50,
component (A): an acrylic resin having a mass average molecular weight of less than 200,000
component (B): at least one selected from a fatty acid, a fatty acid derivative, and a fatty alcohol
component (C): a methacrylic polymer having a mass average molecular weight of 200,000 or more.

## Description

### Technical Field

The present invention relates to a methacrylic resin composition for injection molding or extrusion molding, a resin molded body produced by molding the methacrylic resin composition for injection molding or extrusion molding, and a method for producing the same.

### Background Art

(Meth)acrylic resins, due to having excellent appearance, scratch resistance, heat resistance, and transparency, have been widely used in various applications such as for vehicle members, more specifically, interior or exterior materials, such as tail lamp covers, head lamp covers, meter panels, pillar garnish, front grilles, and emblems; building members; housing equipment parts, such as washstands, bathtubs, and water closets; optical members, such as lenses and light guide bodies; cosmetics containers; and medical components such as cuvettes. In particular, methacrylic resins are frequently used for aesthetic components due to having transparency and are therefore required to have excellent transparency.

In such applications, since products may be scratched due to contact with a human body or a material, (meth)acrylic resins are required to have more excellent scratch resistance.

During injection molding or extrusion molding of a (meth)acrylic resin, a molten resin melted by heat is introduced into a metal mold, cooled, and solidified. After solidification, in particular, the molten resin close to the metal mold tends to become brittle, which leads to a deterioration in the scratch resistance of a resin molded body. To prevent the molten resin from becoming brittle, it is necessary to adjust the metal mold temperature and the injection rate. In particular, regarding the metal mold temperature, it is considered that molding at a temperature of lower than 70°C makes it difficult to prevent embrittlement.

To improve scratch resistance and chemical resistance and to thereby improve moldability and suppress poor appearance, Patent Literature 1 discloses a thermoplastic resin composition containing an acrylic resin, a silicone compound, and a melt-elasticity-imparting agent.

Patent Literature 2 discloses a methacrylic resin composition containing an acrylic resin and a polyester-modified silicone having a specific molecular weight as a methacrylic resin composition that provides a resin molded body having excellent scratch resistance.

### Citation List

### Patent Literature

PTL1: JP 2017-186392 A
PTL2: JP 2021-095482 A

### Summary of Invention

### Technical Problem

Regarding the thermoplastic resin composition disclosed in Patent Literature 1, the scratch resistance and the chemical resistance are improved by mixing the silicone compound into the acrylic resin. However, compatibility between the acrylic resin and the silicone compound is insufficient. In addition, since the refractive index of the acrylic resin differs from the refractive index of the silicone compound, there is a problem that the transparency deteriorates. Therefore, it is difficult to use the thermoplastic resin for applications related to transparency or dense coloring.

The methacrylic resin composition disclosed in Patent Literature 2 has a problem that molding at a metal mold temperature of 70°C or higher is necessary for ensuring sufficient scratch resistance.

It is an object of the present invention to address the above-described problems in the related art and provide a methacrylic resin composition for injection molding or extrusion molding, the methacrylic resin composition being capable of realizing a resin molded body having excellent transparency and scratch resistance even at a metal mold temperature of lower than 70°C.

### Solution to Problem

The present inventor found that including a specific ratio of a compound (B) containing at least one selected from a fatty acid, a fatty acid derivative, and a fatty alcohol and a methacrylic polymer (C) having a mass average molecular weight of 200,000 or more relative to an acrylic resin (A) without using a polyester-modified silicone enables scratch resistance to be markedly realized and enables a resin molded body having excellent transparency and scratch resistance to be obtained even at a metal mold temperature of lower than 70°C.

The gist of present invention is as follows.

[1] A methacrylic resin composition for injection molding or extrusion molding comprising a component (A), a component (B), and a component (C) below, wherein a ratio denoted by [mass of component (C)]/[mass of component (B)] is 0.01 to 50,
   component (A): an acrylic resin having a mass average molecular weight of less than 200,000
   component (B): at least one selected from a fatty acid, a fatty acid derivative, and a fatty alcohol
   component (C): a methacrylic polymer having a mass average molecular weight of 200,000 or more.
[2] The methacrylic resin composition for injection molding or extrusion molding according to [1], wherein a content of the component (B) is 0.01 to 10 parts by mass relative to 100 parts by mass of the component (A).
[3] The methacrylic resin composition for injection molding or extrusion molding according to [2], wherein a content of the component (B) is 0. 1 to 3.0 parts by mass relative to 100 parts by mass of the component (A).
[4] The methacrylic resin composition for injection molding or extrusion molding according to any one of [1] to [3], wherein a content of the component (C) is 0.01 to 8 parts by mass relative to 100 parts by mass of the component (A).
[5] The methacrylic resin composition for injection molding or extrusion molding according to any one of [1] to [4], wherein the component (A) is a polymer containing 50% by mass or more of repeating unit derived from methyl methacrylate.
[6] The methacrylic resin composition for injection molding or extrusion molding according to [5], wherein the component (A) is a polymer containing 70% by mass or more of repeating unit derived from methyl methacrylate.
[7] The methacrylic resin composition for injection molding or extrusion molding according to [6], wherein the component (A) is a polymer containing 90% by mass or more of repeating unit derived from methyl methacrylate.
[8] The methacrylic resin composition for injection molding or extrusion molding according to any one of [1] to [7], wherein the component (C) is a polymer containing 50% by mass or more of repeating unit derived from methyl methacrylate.
[9] The methacrylic resin composition for injection molding or extrusion molding according to [8], wherein the component (C) is a polymer containing 70% by mass or more of repeating unit derived from methyl methacrylate.
[10] The methacrylic resin composition for injection molding or extrusion molding according to any one of [1] to [9], wherein the component (C) is a copolymer of methyl methacrylate and acrylic acid ester.
[11] The methacrylic resin composition for injection molding or extrusion molding according to [10], wherein the acrylic acid ester is butyl acrylate.
[12] The methacrylic resin composition for injection molding or extrusion molding according to any one of [1] to [11], wherein the component (B) has a carbon number of 10 to 25.
[13] The methacrylic resin composition for injection molding or extrusion molding according to [12], wherein the component (B) is at least one selected from stearyl alcohol, palmitic acid, and stearic acid amide.
[14] The methacrylic resin composition for injection molding or extrusion molding according to any one of [1] to [13], wherein a component (D) below is not contained or when the component (D) is contained, a content of the component (D) is more than 0 parts by mass and 15 parts by mass or less relative to 100 parts by mass of the methacrylic resin composition for injection molding or extrusion molding, component (D): a rubber particle having a multilayer structure.
[15] The methacrylic resin composition for injection molding or extrusion molding according to [14], wherein the content of the component (D) is 10 parts by mass or less relative to 100 parts by mass of the methacrylic resin composition for injection molding or extrusion molding.
[16] The methacrylic resin composition for injection molding or extrusion molding according to [14], wherein the component (D) is not contained.
[17] The methacrylic resin composition for injection molding or extrusion molding according to [14] or [15], wherein the component (D) is a component different from the component (A) and the component (C).
[18] A method for manufacturing a resin molded body comprising obtaining the resin molded body by injection molding or extrusion molding a methacrylic resin composition containing a component (A), a component (B), and a component (C) below, wherein a ratio denoted by [mass of component (C)]/[mass of component (B)] is 0.01 to 50,
   component (A): an acrylic resin having a mass average molecular weight of less than 200,000
   component (B): at least one selected from a fatty acid, a fatty acid derivative, and a fatty alcohol
   component (C): a methacrylic polymer having a mass average molecular weight of 200,000 or more.
[19] A resin molded body comprising the methacrylic resin composition for injection molding or extrusion molding according to any one of [1] to [17].
[20] A vehicle member comprising the methacrylic resin composition for injection molding or extrusion molding according to any one of [1] to [17].
[21] A housing equipment part comprising the methacrylic resin composition for injection molding or extrusion molding according to any one of [1] to [17].
[22] An optical member comprising the methacrylic resin composition for injection molding or extrusion molding according to any one of [1] to [17].
[23] A medical component comprising the methacrylic resin composition for injection molding or extrusion molding according to any one of [1] to [17].
[24] A container comprising the methacrylic resin composition for injection molding or extrusion molding according to any one of [1] to [17].
[25] A methacrylic resin composition comprising a component (A), a component (B), and a component (C) below, wherein a ratio denoted by [mass of component (C)]/[mass of component (B)] is 0.01 to 50, and the methacrylic resin composition is used for injection molding or extrusion molding,
   component (A): an acrylic resin having a mass average molecular weight of less than 200,000
   component (B): at least one selected from a fatty acid, a fatty acid derivative, and a fatty alcohol
   component (C): a methacrylic polymer having a mass average molecular weight of 200,000 or more.
[26] A resin molded body obtained by mixing a component (A), a component (B), and a component (C) below so that a ratio denoted by [mass of component (C)]/[mass of component (B)] is set to be 0.01 to 50 and injection molding or extrusion molding the resulting mixture,
   component (A): an acrylic resin having a mass average molecular weight of less than 200,000
   component (B): at least one selected from a fatty acid, a fatty acid derivative, and a fatty alcohol
   component (C): a methacrylic polymer having a mass average molecular weight of 200,000 or more.
[27] A method for manufacturing a resin molded body comprising mixing a component (A), a component (B), and a component (C) below so that a ratio denoted by [mass of component (C)]/[mass of component (B)] is set to be 0.01 to 50 and injection molding or extrusion molding the resulting mixture,
   component (A): an acrylic resin having a mass average molecular weight of less than 200,000
   component (B): at least one selected from a fatty acid, a fatty acid derivative, and a fatty alcohol
   component (C): a methacrylic polymer having a mass average molecular weight of 200,000 or more.

### Advantageous Effects of Invention

According to the methacrylic resin composition for injection molding or extrusion molding of the present invention, the resulting resin molded body can have favorable scratch resistance and can further have excellent transparency. In addition, since the moldability is excellent, problems relating to limitations of the molding condition and the metal mold structure can be improved so as to realize sufficient scratch resistance.

### Description of Embodiments

The present invention will be described below in detail. The following explanation is an example of the embodiment according to the present invention, and the present invention is not limited to the content of the following description within the bounds of not departing from the scope of the invention.

In the present invention, "to" used in the context of numerical values and physical property values is inclusive of values before and after "to".

"(Meth)acrylate" denotes at least one selected from "acrylate" and "methacrylate".

"(Meth)acrylic acid" denotes at least one selected from "acrylic acid" and "methacrylic acid".

"Monomer" denotes an unpolymerized compound, and "repeating unit" denotes a unit that is derived from the monomer and that is formed as a polymer due to monomer polymerization. The repeating unit may be a unit directly formed by a polymerization reaction or a unit formed by conversion of a portion of the above-described unit into another structure by treatment of the polymer.

"Parts by mass" is synonymous with "parts by weight", "% by mass" is synonymous with "% by weight", and "% by mass" represents a content ratio of a predetermined component contained in a total amount of 100% by mass.

### [Methacrylic resin composition for injection molding or extrusion molding]

The methacrylic resin composition for injection molding or extrusion molding according to the present invention is characterized by containing a component (A), a component (B), and a component (C) below, wherein a value denoted by [mass of component (C)]/[mass of component (B)] is 0.01 to 50.
Component (A): an acrylic resin having a mass average molecular weight of less than 200,000 (hereafter also referred to as "acrylic resin (A)")
Component (B): at least one selected from a fatty acid, a fatty acid derivative, and a fatty alcohol (hereafter also referred to as "compound (B) containing at least one selected from a fatty acid, a fatty acid derivative, and a fatty alcohol")
Component (C): a methacrylic polymer having a mass average molecular weight of 200,000 or more (hereafter also referred to as "methacrylic polymer (C) having a mass average molecular weight of 200,000 or more")

The methacrylic resin composition for injection molding or extrusion molding according to the present invention includes a specific ratio of the compound (B) containing at least one selected from a fatty acid, a fatty acid derivative, and a fatty alcohol and the methacrylic polymer (C) having a mass average molecular weight of 200,000 or more relative to the acrylic resin (A). Consequently, a resin molded body produced by molding the methacrylic resin composition for injection molding or extrusion molding (hereafter appropriately referred to as "resulting resin molded body") has excellent transparency and scratch resistance even at a metal mold temperature of lower than 70°C.

Further, the methacrylic resin composition for injection molding or extrusion molding does not contain a component (D) below or may contain a predetermined proportion or less of the component (D).

Component (D): a rubber particle having a multilayer structure (hereafter also referred to as "rubber particle having a multilayer structure (D)")

### [Acrylic resin (A)]

The acrylic resin (A) having a mass average molecular weight of less than 200,000 that serves as the component (A) is one of the components constituting the methacrylic resin composition for injection molding or extrusion molding according to the present invention.

The acrylic resin (A) according to the present invention preferably contains 50% by mass or more of a repeating unit derived from methyl methacrylate (hereafter referred to as "methyl methacrylate unit") relative to a total mass of the acrylic resin (A), more preferably contains 70% by mass or more, further preferably contains 80% by mass or more, particularly preferably contains 90% by mass or more, and most preferably contains 99.5% by mass or more.

An embodiment of the acrylic resin (A) according to the present invention may be a homopolymer of methyl methacrylate or a methyl methacrylate copolymer in which the content ratio of the methyl methacrylate unit in the acrylic resin (A) is 50% by mass or more and less than 100% by mass, more preferably 70% by mass or more and less than 100% by mass, further preferably 80% by mass or more and less than 100% by mass, particularly preferably 90% by mass or more and less than 100% by mass, and most preferably 99.5% by mass or more and less than 100% by mass (hereafter also appropriately referred to as "polymer (A1)").

### <Polymer (A1)>

The polymer (A1) is a homopolymer of methyl methacrylate or a methyl methacrylate copolymer containing 50% by mass or more and less than 100% by mass, more preferably 70% by mass or more and less than 100% by mass, further preferably 80% by mass or more and less than 100% by mass, particularly preferably 90% by mass or more and less than 100% by mass, and most preferably 99.5% by mass or more and less than 100% by mass of methyl methacrylate unit and more than 0% by mass and 50% by mass or less, more preferably more than 0% by mass and 30% by mass or less, further preferably more than 0% by mass and 20% by mass or less, particularly preferably more than 0% by mass and 10% by mass or less, and most preferably more than 0% by mass and 0.5% by mass or less of repeating unit (hereafter referred to as "other monomer unit") derived from other monomer copolymerizable with methyl methacrylate (hereafter referred to as "other monomer").

Of these polymers (A1), a homopolymer of methyl methacrylate is more preferable since the intrinsic performance of the acrylic resin is not readily impaired.

Examples of the other monomer include, (meth)acrylate compounds other than methyl methacrylate such as methyl acrylate, ethyl (meth)acrylate, n-propyl (meth)acrylate, isopropyl (meth)acrylate, n-butyl (meth)acrylate, iso-butyl (meth)acrylate , sec-butyl (meth)acrylate, tert-butyl (meth)acrylate, n-hexyl (meth)acrylate, cyclohexyl (meth)acrylate, n-octyl (meth)acrylate, 2-ethylhexyl (meth)acrylate, isobornyl (meth)acrylate, glycidyl (meth)acrylate, tetrahydrofurfuryl (meth)acrylate, norbornyl (meth)acrylate, adamantyl (meth)acrylate, dicyclopentenyl (meth)acrylate, dicyclopentanyl (meth)acrylate, 2-hydroxyethyl (meth)acrylate, 2-hydroxypropyl (meth)acrylate, and the like; (meth)acrylic acid; (meth)acrylonitrile; (meth)acrylamide compounds such as (meth)acrylamide, N-dimethyl (meth)acrylamide, N - diethyl (meth)acrylamide, methylenebis(meth)acrylamide, and the like; aromatic vinyl compounds such as styrene, α-methylstyrene, and the like; vinyl ether compounds such as vinyl methyl ether, vinyl ethyl ether, 2-hydroxyethyl vinyl ether, and the like; carboxylic acid vinyl compounds such as vinyl acetate, vinyl butyrate, and the like; and olefin compounds such as ethylene, propylene, butene, isobutene, and the like. These other monomers may be used alone or in combination of two or more.

Of these other monomers, (meth)acrylate compounds other than methyl methacrylate are preferable since the intrinsic performance of the acrylic resin is not impaired. Methyl acrylate, ethyl acrylate, and n-butyl acrylate are more preferable, and methyl acrylate and ethyl acrylate are further preferable since the resulting resin molded body has excellent thermal decomposition resistance.

When the polymer (A1) contains another monomer unit, the content ratio of the other monomer unit in 100% by mass of the polymer (A1) is preferably more than 0% by mass and 50% by mass or less, more preferably more than 0% by mass and 30% by mass or less, further preferably more than 0% by mass and 20% by mass or less, particularly preferably more than 0% by mass and 10% by mass or less, and most preferably more than 0% by mass and 0.5% by mass or less since the intrinsic performance of the acrylic resin is not readily impaired.

Examples of the method for manufacturing the polymer (A1) include a bulk polymerization method, a suspension polymerization method, an emulsion polymerization method, and a solution polymerization method. Of these polymerization methods, a bulk polymerization method and a suspension polymerization method are preferable, and a bulk polymerization method is more preferable due to excellent productivity.

The mass average molecular weight of the acrylic resin (A) such as the polymer (A1) is less than 200,000, preferably 20,000 to 200,000, more preferably 50,000 to 150,000, and further preferably 50,000 to 100,000. When the mass average molecular weight of the acrylic resin (A) such as the polymer (A1) is 20,000 or more, the resulting resin molded body has excellent mechanical characteristics. When the mass average molecular weight of the acrylic resin (A) such as the polymer (A1) is less than 200,000, excellent fluidity is exhibited during melt molding.

In the present specification, the mass average molecular weights of the acrylic resin (A) and the methacrylic polymer (C) having a mass average molecular weight of 200,000 or more are values measured by using a standard polystyrene as a standard sample and using gel permeation chromatography (GPC).

When GPC measurement of the resin composition containing the acrylic resin (A) and the methacrylic polymer (C) having a mass average molecular weight of 200,000 or more rather than GPC measurement of each of the acrylic resin (A) and the methacrylic polymer (C) having a mass average molecular weight of 200,000 or more is performed, on a gel permeation chromatography elution curve, a peak denoting the largest abundance appears in a region relevant to the molecular weight of less than 200,000, and a peak denoting the largest abundance appears in a region relevant to the molecular weight of 200,000 or more. Of these, the peak that appears in the region relevant to the molecular weight of less than 200,000 corresponds to the molecular weight of the acrylic resin (A), and the peak that appears in the region relevant to the molecular weight of 200,000 or more corresponds to the molecular weight of the methacrylic polymer (C) having a mass average molecular weight of 200,000 or more.

The lower limit of the content ratio of the acrylic resin (A) in the total mass (100% by mass) of the methacrylic resin composition for injection molding or extrusion molding according to the present invention is preferably 55% by mass or more, more preferably 70% by mass or more, further preferably 90% by mass or more, and particularly preferably 93% by mass or more from the viewpoint of the intrinsic performance, such as transparency, heat resistance, and weather resistance, of the acrylic resin not being impaired with respect to the resulting resin molded body. The upper limit of the content ratio of the acrylic resin (A) is preferably 99% by mass or less, more preferably 98% by mass or less, further preferably 97% by mass or less, and particularly preferably 96% by mass or less from the viewpoint of the resulting resin molded body having excellent scratch resistance.

The above-described preferable upper limit and preferable lower limit may be optionally combined. For example, the content ratio of the acrylic resin (A) in the total mass (100% by mass) of the methacrylic resin composition for injection molding or extrusion molding according to the present invention is preferably 55% by mass or more and 99% by mass or less, more preferably 70% by mass or more and 98% by mass or less, further preferably 90% by mass or more and 97% by mass or less, and particularly preferably 93% by mass or more and 96% by mass or less.

### [Component (B) containing at least one selected from a fatty acid, a fatty acid derivative, and a fatty alcohol]

The component (B) containing at least one selected from a fatty acid, a fatty acid derivative, and a fatty alcohol is one of the components constituting the methacrylic resin composition according to the present invention.

The methacrylic resin composition for injection molding or extrusion molding according to the present invention containing at least one selected from a fatty acid, a fatty acid derivative, and a fatty alcohol that serves as the component (B) enables the viscosity of a molten resin to be decreased, and an interaction with the methacrylic polymer (C) having a mass average molecular weight of 200,000 or more described later enables the resulting resin molded body to have more excellent scratch resistance.

The methacrylic resin composition for injection molding or extrusion molding according to the present invention using, in combination, the compound (B) containing at least one selected from a fatty acid, a fatty acid derivative, and a fatty alcohol and the methacrylic polymer (C) having a mass average molecular weight of 200,000 or more described later remarkably improves the scratch resistance effect and enables the resulting resin molded body to have more favorable scratch resistance without increasing the content of the compound (B) containing at least one selected from a fatty acid, a fatty acid derivative, and a fatty alcohol. Therefore, the intrinsic performance, such as transparency, heat resistance, and weather resistance, of the acrylic resin is not readily impaired.

The lower limit of the content of the compound (B) containing at least one selected from a fatty acid, a fatty acid derivative, and a fatty alcohol contained in the methacrylic resin composition for injection molding or extrusion molding according to the present invention is preferably 0.01 parts by mass or more, more preferably 0.1 parts by mass or more, and further preferably 0.2 parts by mass or more relative to the total mass, 100 parts by mass, of the acrylic resin (A) from the viewpoint of the resulting resin molded body having excellent scratch resistance. On the other hand, the upper limit of the content is preferably 10 parts by mass or less, more preferably 3.0 parts by mass or less, and further preferably 1 part by mass or less relative to the total mass, 100 parts by mass, of the acrylic resin (A) from the viewpoint of the intrinsic performance of the acrylic resin not being impaired with respect to the resulting resin molded body.

The above-described preferable upper limit and preferable lower limit may be optionally combined. For example, the content of the compound (B) containing at least one selected from a fatty acid, a fatty acid derivative, and a fatty alcohol contained in the methacrylic resin composition for injection molding or extrusion molding according to the present invention is preferably 0.01 parts by mass or more and 10 parts by mass or less, more preferably 0.1 parts by mass or more and 3.0 parts by mass or less, and further preferably 0.2 parts by mass or more and 1 part by mass or less relative to the total mass, 100 parts by mass, of the acrylic resin (A).

The lower limit of the carbon number of the compound (B) containing at least one selected from a fatty acid, a fatty acid derivative, and a fatty alcohol is preferably 10 or more, more preferably 15 or more, and further preferably 17 or more from the viewpoint of excellent compatibility with the acrylic resin (A) and the resulting resin molded body having excellent scratch resistance. On the other hand, the upper limit of the carbon number is preferably 25 or less, more preferably 24 or less, and further preferably 23 or less from the viewpoint of the compound (B) containing at least one selected from a fatty acid, a fatty acid derivative, and a fatty alcohol having favorable dispersibility in the methacrylic resin composition for injection molding or extrusion molding and the resulting resin molded body being able to maintain favorable scratch resistance.

The above-described preferable upper limit and preferable lower limit may be optionally combined. For example, the carbon number of the compound (B) containing at least one selected from a fatty acid, a fatty acid derivative, and a fatty alcohol is preferably 10 to 25, more preferably 15 to 24, and further preferably 17 to 23.

### <Fatty acid derivative>

Examples of the fatty acid derivative include fatty acid amides, fatty acid alkyls, and fatty acid glycerides. Of these, fatty acid amide compounds (hereafter appropriately referred to as "fatty acid amide compounds (B-1)") are preferable.

### (Fatty acid amide)

Examples of the fatty acid amide compound (B-1) include saturated fatty acid amide compounds, unsaturated fatty acid amide compounds, and bis-fatty acid amide compounds. One type of the fatty acid amide compounds (B-1) may be used alone, or two or more types thereof may be used in combination. Of these fatty acid amide compounds (B-1), saturated fatty acid amide compounds and unsaturated fatty acid amide compounds are preferable, and saturated fatty acid amide compounds are more preferable since the resulting resin molded body has excellent scratch resistance.

Examples of the saturated fatty acid amide compound include lauric acid amide, palmitic acid amide, stearic acid amide, behenic acid amide, and the like. These saturated fatty acid amide compounds may be used alone or in combination of two or more. Among these saturated fatty acid amide compounds, at least one selected from stearic acid amide, palmitic acid amide, and behenic acid amide is preferred since the resulting resin molded product has excellent scratch resistance.

Examples of unsaturated fatty acid amide include erucic acid amide, oleic acid amide, brassic acid amide, elaidic acid amide, and the like. These unsaturated fatty acid amide compounds may be used alone or in combination of two or more. Among these unsaturated fatty acid amide compounds, erucic acid amide and oleic acid amide are preferable, and erucic acid amide is more preferable, since the resulting resin molded product has excellent scratch resistance.

Examples of bis fatty acid amide compound include bis fatty acid amides such as methylene bis stearic acid amide, methylene bis oleic acid amide, ethylene bis stearic acid amide, ethylene bis oleic acid amide, and the like; and stearyl stearic acid amide, stearyl erucic acid amide, oleyl palmitin acid amide, and the like. These bis fatty acid amide compounds may be used alone or in combination of two or more.

As the fatty acid amide compound (B-1), stearic acid amide is particularly preferred.

### (Fatty acid alkyl)

The fatty acid alkyl is a compound typically having a structure in which a fatty acid having a carbon number of about 10 to 22 and a monohydric fatty alcohol having a carbon number of about 1 to 10 are subjected to dehydration condensation. Examples of fatty acid alkyl include saturated fatty acid alkyls such as methyl laurate, ethyl laurate, butyl laurate, octyl laurate, methyl palmitate, ethyl palmitate, butyl palmitate, octyl palmitate, methyl stearate, ethyl stearate, butyl stearate, octyl stearate, methyl behenate, ethyl behenate, butyl behenate, octyl behenate, and the like; and unsaturated fatty acid alkyls such as methyl oleate, ethyl oleate, butyl oleate, octyl oleate, methyl linoleate, ethyl linoleate, butyl linoleate, octyl linoleate, and the like. These fatty acid alkyls may be used alone or in combination of two or more. Among these, alkyl stearates such as methyl stearate, ethyl stearate, butyl stearate, and octyl stearate are preferred, and methyl stearate is more preferred.

### (fatty acid glyceride)

Fatty acid glyceride is a compound having a structure in which a fatty acid having approximately 10 to 25 carbon atoms and glycerin are dehydrated and condensed. Examples of fatty acid glyceride include fatty acid monoglycerides, fatty acid diglycerides, fatty acid triglycerides, and the like. Specific examples of fatty acid glycerides include saturated fatty acid glycerides such as lauric acid monoglyceride, lauric acid diglyceride, lauric acid triglyceride, palmitic acid monoglyceride, palmitic acid diglyceride, palmitic acid triglyceride, stearic acid monoglyceride, stearic acid diglyceride, stearic acid triglyceride, behenic acid monoglyceride, behenic acid diglyceride, behenic acid triglyceride, and the like; and unsaturated fatty acid glycerides such as oleic acid monoglyceride, oleic acid diglyceride, oleic acid triglyceride, linoleic acid monoglyceride, linoleic acid diglyceride, linoleic acid triglyceride, and the like. These fatty acid glycerides may be used alone or in combination of two or more. Among these, stearic acid glycerides such as stearic acid monoglyceride, stearic acid diglyceride, and stearic acid triglyceride are preferred, and stearic acid monoglyceride is more preferred.

### <Fatty alcohol>

The fatty alcohol (hereafter appropriately referred to as "fatty alcohol (B-2)") is typically a fatty alcohol (B-2) having a carbon number of 10 to 25 but may be a monohydric alcohol or a polyhydric alcohol. Specific examples of the fatty alcohol (B-2) include saturated fatty alcohols, such as lauryl alcohol, palmityl alcohol, stearyl alcohol, and behenyl alcohol; and unsaturated fatty alcohols, such as oleyl alcohol and linolyl alcohol. One type of these fatty alcohols (B-2) may be used alone, or two or more types thereof may be used in combination. Of these, stearyl alcohol is preferable.

### <Fatty acid>

There is no particular limitation regarding the carbon number of the fatty acid (hereafter appropriately referred to as "fatty acid (B-3)"), and preferably, a fatty acid having a carbon number of 10 to 25 may be used. Specific examples of the fatty acid (B-3) include saturated fatty acids, such as lauric acid, palmitic acid, stearic acid, myristic acid, and behenic acid; and unsaturated fatty acids, such as oleic acid and linoleic acid. One type of these fatty acids (B-3) may be used alone, or two or more types thereof may be used in combination. Of these fatty acids (B-3), stearic acid, palmitic acid, and myristic acid are preferable, and palmitic acid is more preferable.

### [Methacrylic polymer (C) having a mass average molecular weight of 200,000 or more]

The methacrylic resin composition for injection molding or extrusion molding according to the present invention contains the methacrylic polymer (C) having a mass average molecular weight of 200,000 or more.

The methacrylic resin composition for injection molding or extrusion molding according to the present invention containing the acrylic resin (A) having a mass average molecular weight of less than 200,000 and the compound (B) containing at least one selected from a fatty acid, a fatty acid derivative, and a fatty alcohol and the methacrylic polymer (C) having a mass average molecular weight of 200,000 or more that serves as the component (C) being present together facilitate entangling between the component (A) and the component (C) or between the components (C) and enable the brittleness of the molten resin to be improved due to formation of pseudo cross-linking points. That is, the component (C) is an additive to thus improve the brittleness of the molten resin. Therefore, the scratch resistance of the resin molded body obtained by mixing the methacrylic polymer (C) having a mass average molecular weight of 200,000 or more can be improved. In addition, since the methacrylic polymer (C) having a mass average molecular weight of 200,000 or more has excellent compatibility with the acrylic resin (A), the resulting resin molded body has favorable transparency.

The methacrylic polymer (C) having a mass average molecular weight of 200,000 or more preferably contains 50% by mass or more of the repeating unit derived from methyl methacrylate, most preferably contains 55% by mass or more, further preferably contains 60% by mass or more, particularly preferably contains 65% by mass or more, and most preferably contains 70% by mass or more since excellent compatibility with the acrylic resin (A) having a mass average molecular weight of less than 200,000 is exhibited.

An embodiment of the methacrylic polymer (C) having a mass average molecular weight of 200,000 or more according to the present invention is a methyl methacrylate copolymer in which the content ratio of the methyl methacrylate unit in the methacrylic polymer (C) having a mass average molecular weight of 200,000 or more is 50% by mass or more and less than 100% by mass, more preferably 55% by mass or more and less than 100% by mass, further preferably 60% by mass or more and less than 100% by mass, particular preferably 65% by mass or more and less than 100% by mass, and most preferably 70% by mass or more and less than 1000 by mass (hereafter also appropriately referred to as "polymer (C1)") .

An embodiment of the polymer (C1) is preferably a polymer (C1) containing 50% by mass or more of the repeating unit derived from methyl methacrylate since excellent compatibility with the acrylic resin (A) is exhibited.

The mass average molecular weight of the polymer (C1) is preferably 500,000 to 8,000,000 and more preferably 1,000,000 to 6,000,000. When the mass average molecular weight is 500,000 or more, the molded body has excellent scratch resistance. In addition, when the mass average molecular weight of the polymer (C1) is 8,000,000 or less, excellent fluidity is exhibited during melt molding.

Further, the polymer (C1) is preferably a straight-chain polymer since entangling between the component (A) and the component (C) or between the components (C) is facilitated.

The mass average molecular weight of the methacrylic polymer (C) having a mass average molecular weight of 200,000 or more, such as the polymer (C1), is preferably 500,000 or more, more preferably 500,000 to 8,000,000, and further preferably 1,000,000 to 6,000,000. When the mass average molecular weight of the methacrylic polymer (C) having a mass average molecular weight of 200,000 or more, such as the polymer (C1), is 500,000 or more, the resulting resin molded body has excellent chemical resistance. In addition, when the mass average molecular weight of the methacrylic polymer (C) having a mass average molecular weight of 200,000 or more, such as the polymer (C1), is 8,000,000 or less, excellent fluidity is exhibited during melt molding.

The content of the methacrylic polymer (C) having a mass average molecular weight of 200,000 or more in the methacrylic resin composition for injection molding or extrusion molding according to the present invention is preferably 0.1 parts by mass to 8 parts by mass, more preferably 0.5 parts by mass to 5 parts by mass, and particularly preferably 0.5 parts by mass to 4.5 parts by mass relative to 100 parts by mass of the acrylic resin (A). The content of the methacrylic polymer (C) having a mass average molecular weight of 200,000 or more being 0.1 parts by mass or more enables poor molding to be suppressed, and the resulting resin molded body has an excellent appearance. When the content of the methacrylic polymer (C) having a mass average molecular weight of 200,000 or more is 8 parts by mass or less, excellent fluidity is exhibited during melt molding.

### [[Mass of component (C)]/[mass of component (B)]]

Regarding the methacrylic resin composition for injection molding or extrusion molding according to the present invention, the ratio denoted by [mass of component (C)]/[mass of component (B)], that is, [mass of methacrylic polymer (C) having mass average molecular weight of 200,000 or more]/[mass of compound (B)] containing at least one selected from fatty acid, fatty acid derivative, and fatty alcohol], is 50 or less. From the viewpoint of transparency, [mass of component (C)]/[mass of component (B)] is preferably 40 or less, more preferably 30 or less, further preferably 10 or less, and particularly preferably 4.5 or less. On the other hand, from the viewpoint of scratch resistance, [mass of component (C)]/[mass of component (B)] is 0.01 or more, preferably 0.2 or more, more preferably 1 or more, further preferably 2 or more, and particularly preferably 2.5 or more.

The above-described preferable upper limit and preferable lower limit may be optionally combined. For example, [mass of component (C)]/[mass of component (B)] is within the range of 0.01 or more and 50 or less, preferably 0.2 or more and 40 or less, more preferably 1 or more and 30 or less, further preferably 2 or more and 10 or less, and particularly preferably 2.5 or more and 4.5 or less.

Although the mechanism of the effect of the present invention due to [mass of component (C)]/[mass of component (B)] being set to be within the above-described range is not certain, it is conjectured that the compound (B) containing at least one selected from a fatty acid, a fatty acid derivative, and a fatty alcohol and the methacrylic polymer (C) having a mass average molecular weight of 200,000 or more at a ratio within the above-described range being mixed into the acrylic resin (A) decreases the viscosity of the acrylic resin (A) due to the compound (B) and facilitates entangling between the component (A) and the component (C) or between the components (C) due to the component (C) being present together so as to improve the brittleness of the molten resin due to formation of pseudo cross-linking points. In addition, since the component (B) and the component (C) have favorable compatibility with the acrylic resin (A), the scratch resistance of the resulting resin molded body can be remarkably improved at even a metal mold temperature of lower than 70°C without deteriorating the transparency.

### [Rubber particle (D) having multilayer structure]

The methacrylic resin composition for injection molding or extrusion molding according to the present invention may further contain a rubber particle (D) having a multilayer structure as a component (D) but is not limited to containing the component (D). The rubber particle (D) having a multilayer structure can be mixed provided that the content of the component (D) is within the range of more than 0 parts by mass and 15 parts by mass or less relative to 100 parts by mass of the methacrylic resin composition. The content of the rubber particle (D) having a multilayer structure is preferably more than 0 parts by mass and 10 parts by mass or less, more preferably more than 0 parts by mass and 5 parts by mass or less, and further preferably more than 0 parts by mass and 3 parts by mass or less relative to 100 parts by mass of the methacrylic resin composition for injection molding or extrusion molding according to the present invention, and particularly preferably, the rubber particle (D) is not contained from the viewpoint of maintaining the scratching resistance effect and the transparency effect obtained by using the component (A), the component (B), and the component (C) in combination.

In this regard, the rubber particle (D) having a multilayer structure is a component different from the component (A) and the component (C).

Regarding the rubber particle (D) having a multilayer structure, known impact modifiers may be used. For example, an impact stiffener disclosed in International Publication No. 2018/016473 may be used.

### [Carbon black (E)]

Carbon black (E) may be mixed into the methacrylic resin composition for injection molding or extrusion molding according to the present invention. The carbon black (E) being mixed enables the resulting resin molded body to take on more excellent jet black.

The carbon black (E) is preferably, for example, carbon black coated with a surface coating agent from the viewpoint of improving the compatibility with the acrylic resin (A) and improving the dispersibility of the carbon black (E) in the methacrylic resin composition for injection molding or extrusion molding so as to enable the resulting resin molded body to realize deeper jet black.

There is no particular limitation regarding the coating agent, and the coating agent is preferably, for example, at least one selected from the group consisting of zinc stearate, magnesium stearate, calcium stearate, oleic acid amide, stearic acid amide, palmitic acid amide, methylenebisstearylamide, and ethylenebisstearylamide. One type of these surface coating agents may be used alone, or two or more types thereof may be used in combination.

### [Other additives]

The methacrylic resin composition for injection molding or extrusion molding according to the present invention may contain, in addition to the above-described components, other additives within the amount of mixing that does not impairing the performance of the resulting resin molded body.

Examples of the other additive include ultraviolet absorbing agents, antioxidants, light stabilizers, plasticizers, light dispersing agents, delustering agents, lubricants, mold release agents, antistatic agents, fluidity modifiers, slidability-imparting agents, and coloring agents such as pigments and dyes. One type of these additives may be used alone, or two or more types thereof may be used in combination.

### [Method for manufacturing methacrylic resin composition for injection molding or extrusion molding]

The methacrylic resin composition for injection molding or extrusion molding according to the present invention may be produced by mixing the acrylic resin (A), the compound (B) containing at least one selected from a fatty acid, a fatty acid derivative, and a fatty alcohol, the methacrylic polymer (C) having a mass average molecular weight of 200,000 or more, and other components used, as the situation demands, in accordance with a common method, and there is no particular limitation regarding the method.

Examples of the method for mixing each component include a method in which the acrylic resin (A), the compound (B) containing at least one selected from a fatty acid, a fatty acid derivative, and a fatty alcohol, the methacrylic polymer (C) having a mass average molecular weight of 200,000 or more, and other components used, as the situation demands, are placed in a single-screw extruder or a twin-screw extruder and mixed by hot-melt extrusion at about 220°C to 280°C.

Alternatively, the methacrylic resin composition for injection molding or extrusion molding according to the present invention may be produced by a method in which the compound (B) containing at least one selected from a fatty acid, a fatty acid derivative, and a fatty alcohol is added to a monomer mainly containing methyl methacrylate serving as a raw material monomer of the acrylic resin (A) and a monomer serving as a raw material monomer of the methacrylic polymer (C) having a mass average molecular weight of 200,000 or more, and thereafter bulk polymerization thereof is performed. That is, in the method, production of the acrylic resin (A), production of the methacrylic polymer (C) having a mass average molecular weight of 200,000 or more, and mixing of the compound (B) containing at least one selected from a fatty acid, a fatty acid derivative, and a fatty alcohol are simultaneously performed.

Further, the methacrylic resin composition for injection molding or extrusion molding according to the present invention may also be produced by a method in which the compound (B) containing at least one selected from a fatty acid, a fatty acid derivative, and a fatty alcohol is attached to the surface of the pellet of the acrylic resin (A) and/or the pellet of the methacrylic polymer (C) having a mass average molecular weight of 200,000 or more prepared in advance and, during molding, mixing of the compound (B) containing at least one selected from a fatty acid, a fatty acid derivative, a fatty alcohol is performed simultaneously with molding.

### [Resin molded body]

The resin molded body according to the present invention is a resin molded body produced by molding the methacrylic resin composition for injection molding or extrusion molding according to the present invention.

The molding method for obtaining the resin molded body according to the present invention is injection molding or extrusion molding. Of these, injection molding is preferable. In this regard, the resulting resin molded body may be further subjected to secondary molding, such as pressure molding or vacuum molding. The molding conditions, such as a molding temperature and a molding pressure, may be appropriately set.

The resin molded body according to the present invention may be produced by, for example, appropriately setting an extruder and a metal mold temperature when the methacrylic resin composition for injection molding or extrusion molding containing the acrylic resin (A), the compound (B) containing at least one selected from a fatty acid, a fatty acid derivative, and a fatty alcohol, and the methacrylic polymer (C) having a mass average molecular weight of 200,000 or more is subjected to injection molding or extrusion molding.

The methacrylic resin composition for injection molding or extrusion molding according to the present invention can obtain a resin molded body having excellent transparency, scratching resistance, and the like even at a metal mold temperature of 70°C or lower due to the effect of mixing a predetermined ratio of the compound (B) containing at least one selected from a fatty acid, a fatty acid derivative, and a fatty alcohol and the methacrylic polymer (C) having a mass average molecular weight of 200,000 or more into the acrylic resin (A).

The metal mold temperature during molding may be set to be, for example, 60°C to 90°C. However, the metal mold temperature is not limited to this and may be about 40°C to 100°C.

### [Application]

The resin molded body according to the present invention has excellent scratch resistance and, therefore, is suitable for, for example, vehicle members, more specifically, interior or exterior materials, such as tail lamp covers, head lamp covers, meter panels, pillar garnish, front grilles, and emblems; building members; housing equipment parts, such as washstands, bathtubs, and water closets; optical members, such as lenses and light guide bodies, containers for cosmetics, and the like, and medical components such as cuvettes.

### EXAMPLES

The present invention will be specifically described below with reference to Examples, but the present invention is not limited to such Examples.

### <Scratch resistance test>

Regarding the indicator of the scratch resistance of the methacrylic resin composition for injection molding or extrusion molding, a difference in the color tone (ΔL*) between before and after the scratch resistance test was evaluated in accordance with the following method.

### (Preparation of specimen)

A black pellet of a methacrylic resin composition was obtained by supplying 100 parts by mass of the methacrylic resin composition obtained in Example or Comparative example, 0.02 parts of Mitsubishi (registered trademark) Carbon black #45 serving as a known black coloring agent, 0.05 parts by mass of DIARESIN (registered trademark) Green C (Solvent Green 3), 0.14 parts by mass of MACROLEX (registered trademark) Yellow 3G (Solvent Yellow 93), and 0.18 parts by mass of DIARESIN (registered trademark) Blue G (Solvent Violet 13) to a twin-screw extruder (model name "PCM45" produced by Ikegai Corporation) and performing kneading at 250°C. The resulting black pellet was supplied to an injection molding machine (model name "FAS-T100D produced by FANUC CORPORATION"), and injection molding was performed under Molding condition 1 or Molding condition 2 below so that a resin molded body (width of 140 mm, length of 140 mm, and thickness of 3 mm) was obtained under each molding condition.
Molding condition 1:
   Molding temperature: 240°C
   Metal mold temperature: 60°C
   Injection rate: 20 mm/sec
Molding condition 2:
   Molding temperature: 240°C
   Metal mold temperature: 60°C
   Injection rate: 50 mm/sec

### (Scratch resistance)

The resin molded body obtained under each of Molding condition 1 and Molding condition 2 was placed on a flat table, and a scratch resistance test was performed by using a Gakushin-type rubbing tester (Rubbing Tester For Color Fastness, model name "RT-200" produced by DAIEI KAGAKU SEIKI MFG. CO., LTD.) and reciprocating, 100 times, an Economy Car Wash Towel YP-138-A (trade name, produced by JOYFULL Co., Ltd.) used as a rubbing finger under the conditions of a load of 1,000 g and a distance of 100 mm. With respect to the resin molded body before and after the scratch resistance test, a spectrophotometer (model name "SD 7000" produced by NIPPON DENSHOKU INDUSTRIES CO., LTD.) was used, light is incident in the direction parallel to the direction of reciprocation of the rubbing finger, ΔL* (brightness difference in the L*a*b* color system) of an incident light flux was measured under the conditions of a diameter of 12.7 mm, D65 light source-field of view of 10°, and reflectance measurement·SCE system, and evaluation was performed in accordance with the following criteria.
Ⓞ: ΔL* is less than 0.4
∘: ΔL* is 0.4 or more and less than 0.8
Δ: ΔL* is 0.8 or more and less than 1.0
×: ΔL* is 1.0 or more

### <Evaluation of transparency>

Regarding the indicator of the scratch resistance of the methacrylic resin composition for injection molding or extrusion molding, a difference in the color tone (ΔL*) between before and after the scratch resistance test was evaluated in accordance with the following method.

### (Production of specimen)

A resin molded body (width of 140 mm, length of 140 mm, and thickness of 3 mm) was obtained by supplying 100 parts by mass of the methacrylic resin composition obtained in Example or Comparative example to an injection molding machine (model name "FAS-T100D produced by FANUC CORPORATION") and performing injection molding under Molding condition 1 below.
Molding condition 1:
   Molding temperature: 240°C
   Metal mold temperature: 60°C
   Injection rate: 20 mm/sec
(Transparency)

With respect to the specimen obtained under Molding condition 1 above, a haze meter (model name: HM-150L2N produced by MURAKAMI COLOR RESEARCH LABORATORY) was used, a total light transmittance (%) was measured in conformity with ISO 13468, in addition, a haze value (%) was measured in conformity with ISO 14782, and evaluation was performed in accordance with the following criteria.
o: the total light transmittance is 90% or more and the haze value is less than 1%
×: the total light transmittance is less than 90% or the haze value is 1% or more

### <Raw material>

· Acrylic resin (A-1): ACRYPET (registered trademark) VH5 (trade name, produced by Mitsubishi Chemical Corporation, an acrylic resin containing 95% by mass or more of repeating unit derived from methyl methacrylate, mass average molecular weight: 80,000)
· Fatty acid amide compound (B-1): IncroMaxPS (trade name, produced by CRODA, a fatty amid containing stearic acid amide as a primary component)
· Fatty alcohol (B-2): KALCOL 8688 (trade name, produced by Kao Corporation, a fatty alcohol containing stearyl alcohol as a primary component)
· Methacrylic polymer (C-1) having a mass average molecular weight of 200,000 or more: METABLEN (registered trademark) P530A (trade name, produced by Mitsubishi Chemical Corporation, a straight-chain polymer containing 50% by mass or more of repeating unit derived from methyl methacrylate, mass average molecular weight: 2,000,000 or more)
· Methacrylic polymer (C-2) having a mass average molecular weight of 200,000 or more: METABLEN (registered trademark) P551A (trade name, produced by Mitsubishi Chemical Corporation, a straight-chain polymer containing 50% by mass or more of repeating unit derived from methyl methacrylate, mass average molecular weight: 1,000,000 or more)

### <Example 1>

A pellet-like methacrylic resin composition for injection molding or extrusion molding was obtained by supplying 100 parts by mass of the acrylic resin (A-1), 1.00 parts by mass of the fatty acid amide compound (B-1), and 3.00 parts by mass of the methacrylic polymer (C-1) having a mass average molecular weight of 200,000 or more to a twin-screw extruder (model name "PCM30" produced by Ikegai Corporation) and performing kneading at 250°C. The scratch resistance and the transparency of the resulting methacrylic resin composition for injection molding or extrusion molding were evaluated. The results are presented in Table 1.

### <Examples 2 to 9 and Comparative examples 1 to 3>

A pellet-like methacrylic resin composition was obtained by performing operations akin to that in Example 1 except that the combination was as presented in Table 1. The evaluation results of the resulting methacrylic resin composition are presented in Table 1.

**[Table 1]**

| | Acrylic resin (A) | | Compound (B) containing at least one selected from fatty acid, fatty acid derivative, and fatty alcohol | | Methacrylic polymer (C) having mass average molecular weight of 200,000 or more | | Ratio* | Scratch resistance | | Transparency |
|---|---|---|---|---|---|---|---|---|---|---|
| | Type | Content (parts by mass) | Type | Content (parts by mass) | Type | Content (parts by mass) | C/B | Molding condition 1 | Molding condition 2 | Molding condition 1 |
| Example 1 | (A-1) | 100 | (B-1) | 1.00 | (C-1) | 3.00 | 3 | Ⓞ | ○ | ○ |
| Example 2 | (A-1) | 100 | (B-2) | 0.10 | (C-1) | 3.00 | 30 | ○ | ○ | ○ |
| Example 3 | (A-1) | 100 | (B-2) | 0.10 | (C-1) | 1.00 | 10 | ○ | ○ | ○ |
| Example 4 | (A-1) | 100 | (B-2) | 0.10 | (C-2) | 3.00 | 30 | ○ | ○ | ○ |
| Example 5 | (A-1) | 100 | (B-3) | 0.10 | (C-1) | 3.00 | 30 | ○ | ○ | ○ |
| Example 6 | (A-1) | 100 | (B-1) | 2.00 | (C-1) | 5.00 | 2.5 | Ⓞ | ○ | ○ |
| Example 7 | (A-1) | 100 | (B-1) | 2.00 | (C-1) | 0.20 | 0.1 | Ⓞ | ○ | ○ |
| Example 8 | (A-1) | 100 | (B-2) | 0.10 | (C-1) | 5.00 | 50 | ○ | ○ | ○ |
| Example 9 | (A-1) | 100 | (B-2) | 0.10 | (C-1) | 0.50 | 5 | ○ | ○ | ○ |
| Comparative example 1 | (A-1) | 100 | - | 0 | - | 0 | - | Δ | × | ○ |
| Comparative example 2 | (A-1) | 100 | - | 0 | (C-1) | 0.50 | - | Δ | Δ | ○ |
| Comparative example 3 | (A-1) | 100 | (B-1) | 1.00 | - | 0 | - | Ⓞ | × | ○ |

| | | | | | | | | | | |
|---|---|---|---|---|---|---|---|---|---|---|
| *[mass of component (C)]/[mass of component (B)] | | | | | | | | | | |

As presented in Table 1, since the methacrylic resin composition for injection molding or extrusion molding of Examples 1 to 9 contains the component (A), the component (B), and the component (C) and since the value denoted by [mass of component (C)]/[mass of component (B)] was 0.01 to 50, the resin molded body had excellent scratch resistance and transparency regardless of the molding condition.

The methacrylic resin composition of Comparative example 1 contains only the acrylic resin (A) and contains neither compound (B) containing at least one selected from a fatty acid, a fatty acid derivative, and a fatty alcohol nor methacrylic polymer (C) having a mass average molecular weight of 200,000 or more so that the scratch resistance is poor even under Molding condition 1 and under Molding condition 2.

Regarding Comparative example 2, the compound (B) containing at least one selected from a fatty acid, a fatty acid derivative, and a fatty alcohol was not contained, and the scratch resistance was insufficient even under Molding condition 1 and Molding condition 2.

Regarding Comparative example 3, the methacrylic polymer (C) having a mass average molecular weight of 200,000 or more was not contained, excellent scratch resistance was obtained under Molding condition 1, but the scratch resistance was poor under Molding condition 2.

Although the present invention has been described in detail with reference to particular embodiments, it will be apparent to those skilled in the art that various modifications may be made therein without departing from the spirit and scope of the present invention.

The present application is based on Japanese Patent Application No. 2021-206169 filed on December 20, 2021, which is incorporated herein by reference in their entirety.

### Industrial Applicability

According to the methacrylic resin composition for injection molding or extrusion molding of the present invention, a resin molded body having excellent transparency and excellent scratch resistance can be obtained even at a metal mold temperature of lower than 70°C.

The resin molded body according to the present invention has excellent scratch resistance. Therefore, the resin molded body is used for, for example, housing equipment members, such as washstands, bathtubs, and water closets; building members; and vehicle members, such as, interior or exterior materials for vehicles and, in particular, is suitable for vehicle members.

Examples of the vehicle exterior material include tail lamp covers, door mirror housings, pillar covers (sash covers), license garnish, front grilles, fog garnish, and emblems.

## Claims

1. A methacrylic resin composition for injection molding or extrusion molding comprising a component (A), a component (B), and a component (C) below, wherein a ratio denoted by [mass of component (C)]/[mass of component (B)] is 0.01 to 50,
component (A): an acrylic resin having a mass average molecular weight of less than 200,000
component (B): at least one selected from a fatty acid, a fatty acid derivative, and a fatty alcohol
component (C): a methacrylic polymer having a mass average molecular weight of 200,000 or more.

2. The methacrylic resin composition for injection molding or extrusion molding according to Claim 1, wherein a content of the component (B) is 0.01 to 10 parts by mass relative to 100 parts by mass of the component (A).

3. The methacrylic resin composition for injection molding or extrusion molding according to Claim 2, wherein a content of the component (B) is 0. 1 to 3.0 parts by mass relative to 100 parts by mass of the component (A).

4. The methacrylic resin composition for injection molding or extrusion molding according to Claim 1, wherein a content of the component (C) is 0.01 to 8 parts by mass relative to 100 parts by mass of the component (A).

5. The methacrylic resin composition for injection molding or extrusion molding according to Claim 1, wherein the component (A) is a polymer containing 50% by mass or more of repeating unit derived from methyl methacrylate.

6. The methacrylic resin composition for injection molding or extrusion molding according to Claim 5, wherein the component (A) is a polymer containing 70% by mass or more of repeating unit derived from methyl methacrylate.

7. The methacrylic resin composition for injection molding or extrusion molding according to Claim 6, wherein the component (A) is a polymer containing 90% by mass or more of repeating unit derived from methyl methacrylate.

8. The methacrylic resin composition for injection molding or extrusion molding according to Claim 1, wherein the component (C) is a polymer containing 50% by mass or more of repeating unit derived from methyl methacrylate.

9. The methacrylic resin composition for injection molding or extrusion molding according to Claim 8, wherein the component (C) is a polymer containing 70% by mass or more of repeating unit derived from methyl methacrylate.

10. The methacrylic resin composition for injection molding or extrusion molding according to Claim 1, wherein the component (C) is a copolymer of methyl methacrylate and acrylic acid ester.

11. The methacrylic resin composition for injection molding or extrusion molding according to Claim 10, wherein the acrylic acid ester is butyl acrylate.

12. The methacrylic resin composition for injection molding or extrusion molding according to Claim 1, wherein the component (B) has a carbon number of 10 to 25.

13. The methacrylic resin composition for injection molding or extrusion molding according to Claim 12, wherein the component (B) is at least one selected from stearyl alcohol, palmitic acid, and stearic acid amide.

14. The methacrylic resin composition for injection molding or extrusion molding according to Claim 1, wherein a component (D) below is not contained or when the component (D) is contained, a content of the component (D) is more than 0 parts by mass and 15 parts by mass or less relative to 100 parts by mass of the methacrylic resin composition for injection molding or extrusion molding,
component (D): a rubber particle having a multilayer structure.

15. The methacrylic resin composition for injection molding or extrusion molding according to Claim 14, wherein the content of the component (D) is 10 parts by mass or less relative to 100 parts by mass of the methacrylic resin composition for injection molding or extrusion molding.

16. The methacrylic resin composition for injection molding or extrusion molding according to Claim 14, wherein the component (D) is not contained.

17. The methacrylic resin composition for injection molding or extrusion molding according to Claim 14, wherein the component (D) is a component different from the component (A) and the component (C).

18. A method for manufacturing a resin molded body comprising obtaining the resin molded body by injection molding or extrusion molding a methacrylic resin composition containing a component (A), a component (B), and a component (C) below, wherein a ratio denoted by [mass of component (C)]/[mass of component (B)] is 0.01 to 50,
component (A): an acrylic resin having a mass average molecular weight of less than 200,000
component (B): at least one selected from a fatty acid, a fatty acid derivative, and a fatty alcohol
component (C): a methacrylic polymer having a mass average molecular weight of 200,000 or more.

19. A resin molded body comprising the methacrylic resin composition for injection molding or extrusion molding according to any one of Claims 1 to 17.

20. A vehicle member comprising the methacrylic resin composition for injection molding or extrusion molding according to any one of Claims 1 to 17.

21. A housing equipment part comprising the methacrylic resin composition for injection molding or extrusion molding according to any one of Claims 1 to 17.

22. An optical member comprising the methacrylic resin composition for injection molding or extrusion molding according to any one of Claims 1 to 17.

23. A medical component comprising the methacrylic resin composition for injection molding or extrusion molding according to any one of Claims 1 to 17.

24. A container comprising the methacrylic resin composition for injection molding or extrusion molding according to any one of Claims 1 to 17.

25. A methacrylic resin composition comprising a component (A), a component (B), and a component (C) below, wherein a ratio denoted by [mass of component (C)]/[mass of component (B)] is 0.01 to 50, and the methacrylic resin composition is used for injection molding or extrusion molding,
component (A): an acrylic resin having a mass average molecular weight of less than 200,000
component (B): at least one selected from a fatty acid, a fatty acid derivative, and a fatty alcohol
component (C): a methacrylic polymer having a mass average molecular weight of 200,000 or more.

26. A resin molded body obtained by mixing a component (A), a component (B), and a component (C) below so that a ratio denoted by [mass of component (C)]/[mass of component (B)] is set to be 0.01 to 50 and injection molding or extrusion molding the resulting mixture,
component (A): an acrylic resin having a mass average molecular weight of less than 200,000
component (B): at least one selected from a fatty acid, a fatty acid derivative, and a fatty alcohol
component (C): a methacrylic polymer having a mass average molecular weight of 200,000 or more.

27. A method for manufacturing a resin molded body comprising mixing a component (A), a component (B), and a component (C) below so that a ratio denoted by [mass of component (C)]/[mass of component (B)] is set to be 0.01 to 50 and injection molding or extrusion molding the resulting mixture,
component (A): an acrylic resin having a mass average molecular weight of less than 200,000
component (B): at least one selected from a fatty acid, a fatty acid derivative, and a fatty alcohol
component (C): a methacrylic polymer having a mass average molecular weight of 200,000 or more.
